# EUROPEAN PATENT APPLICATION

(11) **EP 4 276 033 A1**
(43) Date of publication of application: **15.11.2023**
(21) Application number: 21917689.8
(22) Date of filing: 22.12.2021
(51) Int. Cl.: B65D 77/00, A47K 10/16, A47K 10/20, A47K 10/42

(54) **PACKAGING BAG, PACKAGING BAG MANUFACTURING METHOD, AND SHEET PACKAGE**

(30) Priority: 08.01.2021 JP 2021002260
(71) Applicant: DAIO PAPER CORPORATION, Shikokuchuo-shi Ehime 799-0492 (JP)
(72) Inventor: WARASHINA, Shinichi, Fuji-shi, Shizuoka 419-0202 (JP); KAWAMURA, Koichi, Fuji-shi, Shizuoka 419-0202 (JP)
(74) Representative: Epping - Hermann - Fischer
(86) International application number: PCT/JP2021/047536
(87) International publication number: WO 2022/149469

(57) **Abstract**

A packaging bag for storing sheets is provided. The packaging bag includes: a paper layer containing a paper component; and a resin layer containing a thermoplastic resin provided on at least one surface of the paper layer. A proportion of the paper component in the packaging bag is 50% or more.

## Description

### [Technical Field]

The present invention relates to a packaging bag, a method for manufacturing the packaging bag, and a sheet package.

### [Background Art]

A sheet package containing sheets of paper towels, tissue paper, or the like, is distributed and used in a state where a plurality of sheets are contained in a packaging bag made of a resin film (see, for example, PTL 1 and 2).

In recent years, in interest of curbing the environmental impact of, for example, global warming caused by CO₂ emissions and marine pollution from microplastics, the use of paper instead of resin as a material for packaging bags of sheet packages (that is, "paperization") has been gaining attention.

### [Citation List]

### [Patent Literature]

[PTL 1]
   Japanese Laid-Open Patent Publication No. 2008-183034
[PTL 2]
   Japanese Laid-Open Patent Publication No. 2018-177364

### [Summary of Invention]

### [Technical Problem]

However, when the packaging bag of the sheet package is made of paper, the packaging bag made of paper is less flexible than the packaging bag made of resin, so the packaging bag is likely to break during manufacturing or transportation of the sheet package.

An object of the present invention is to provide a packaging bag that is less likely to break, even when it is made of paper.

### [Solution to Problem]

One aspect of the present invention is: a packaging bag for storing sheets, the packaging bag including: a paper layer containing a paper component; and a resin layer containing a thermoplastic resin provided on at least one surface of the paper layer, wherein a proportion of the paper component in the packaging bag is 50% or more.

### [Advantageous Effects of Invention]

According to one aspect of the present invention, a packaging bag that is less likely to break can be provided.

### [Brief Description of the Drawings]

[FIG. 1]

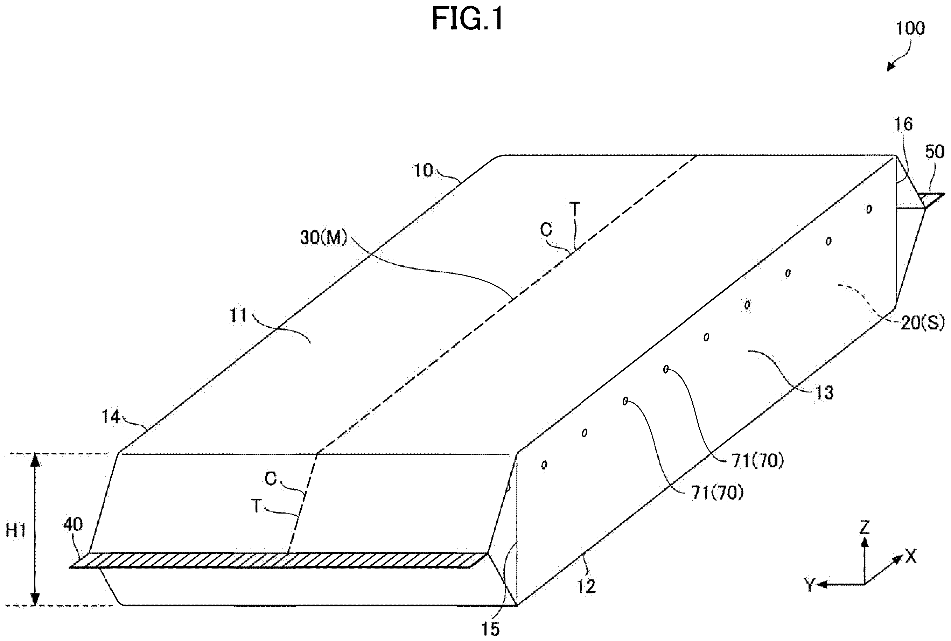

   FIG. 1 is a diagram illustrating a sheet package in which sheets are contained in a packaging bag according to an embodiment;
[FIG. 2]

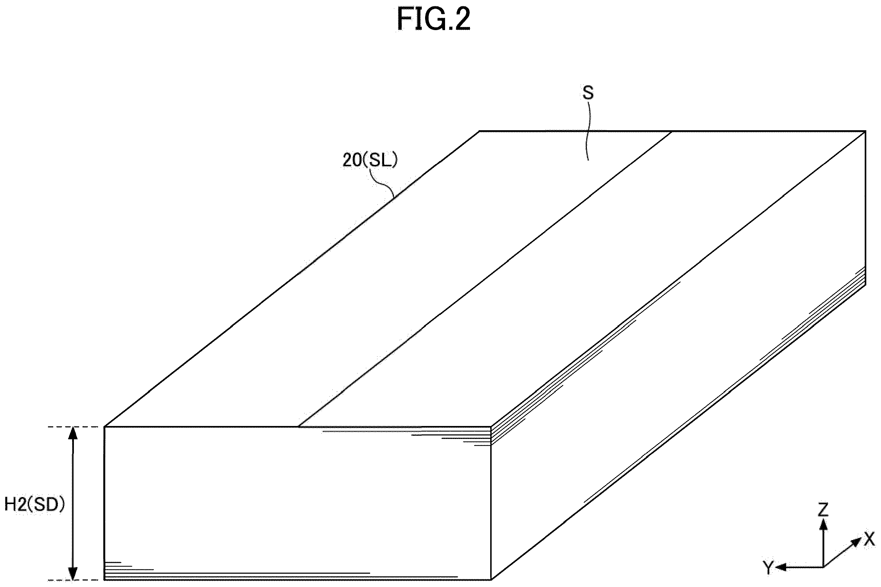

   FIG. 2 is a diagram illustrating the sheets contained in the packaging bag according to the embodiment;
[FIG. 3]

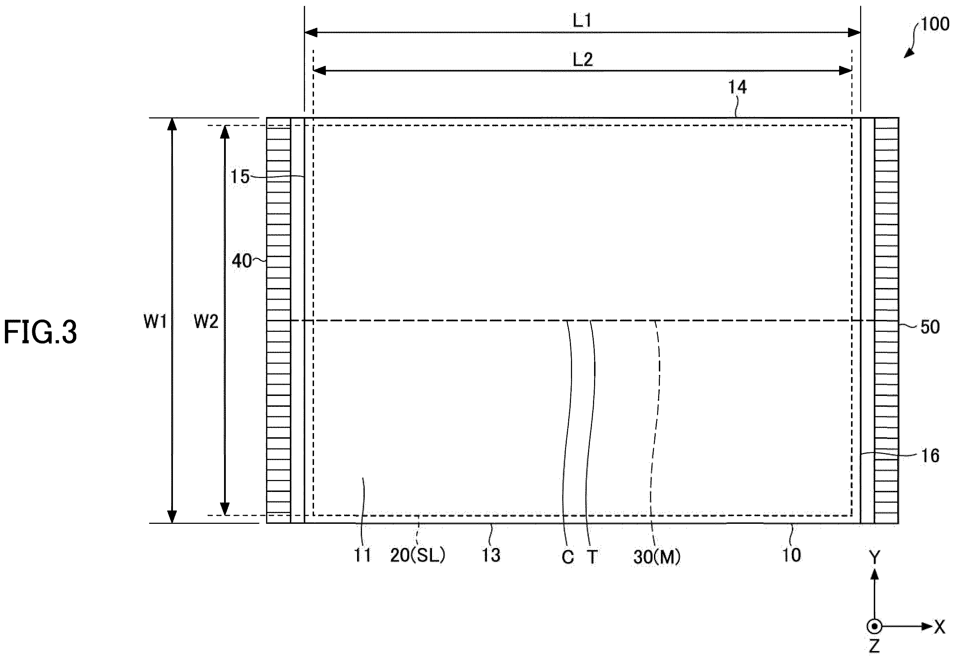

   FIG. 3 is a view of the sheet package of FIG. 1 from the top side;
[FIG. 4]

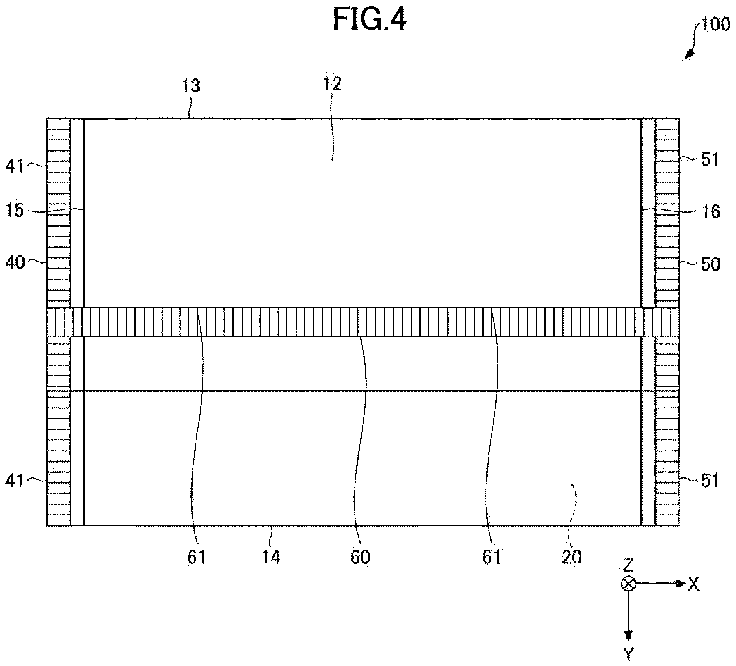

   FIG. 4 is a view of the sheet package of FIG. 1 from the bottom side;
[FIG. 5]

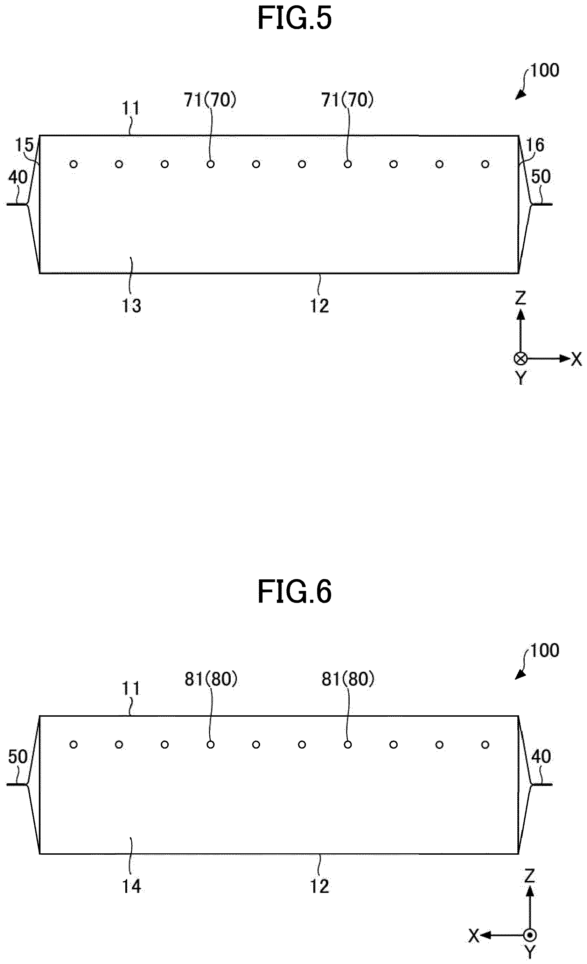

   FIG. 5 is a view of the sheet package of FIG. 1 from the front side;
[FIG. 6]
   FIG. 6 is a view of the sheet package of FIG. 1 from the back side;
[FIG. 7]

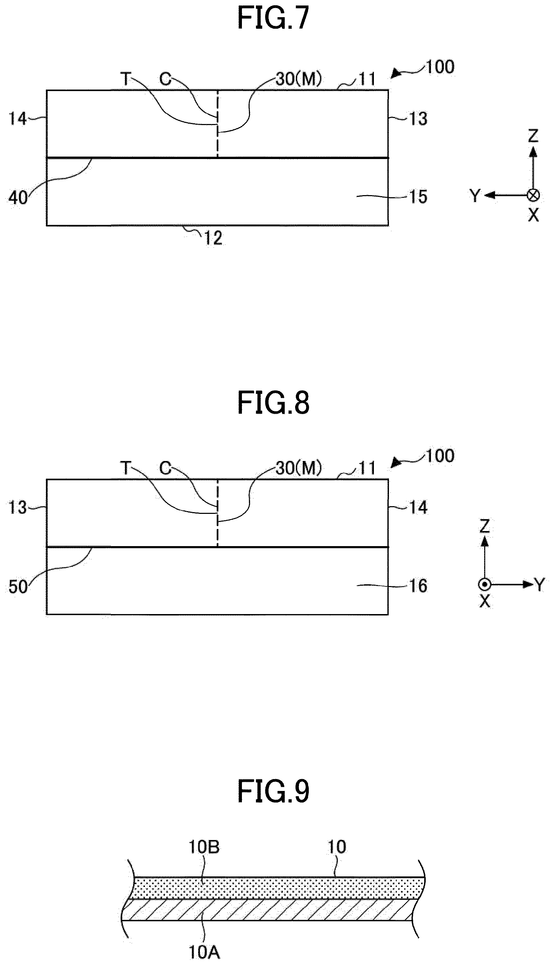

   FIG. 7 is a view of the sheet package of FIG. 1 from the left side;
[FIG. 8]
   FIG. 8 is a view of the sheet package of FIG. 1 from the right side;
[FIG. 9]
   FIG. 9 is a diagram illustrating a cross section of an example (two-layer structure) of the packaging bag of an embodiment;
[FIG. 10]

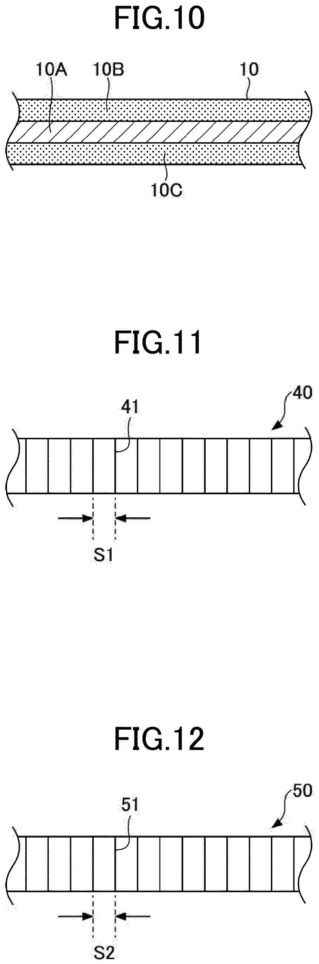

   FIG. 10 is a diagram illustrating a cross section of an example (three-layer structure) of the packaging bag of an embodiment;
[FIG. 11]
   FIG. 11 is a diagram illustrating an example of a seal portion of the packaging bag of the present embodiment;
[FIG. 12]
   FIG. 12 is a diagram illustrating an example of a seal portion of the packaging bag of the present embodiment;
[FIG. 13]

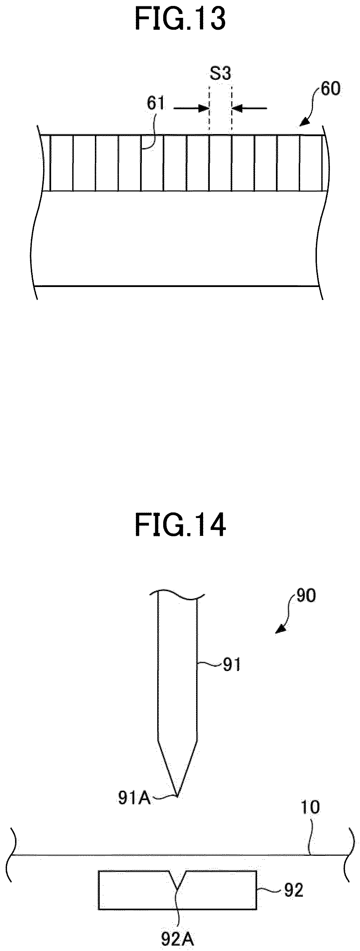

   FIG. 13 is a diagram illustrating an example of a seal portion of the packaging bag of the present embodiment;
[FIG. 14]
   FIG. 14 is a diagram illustrating an example of a device forming a vent hole of the packaging bag according to the present embodiment; and
[FIG. 15]

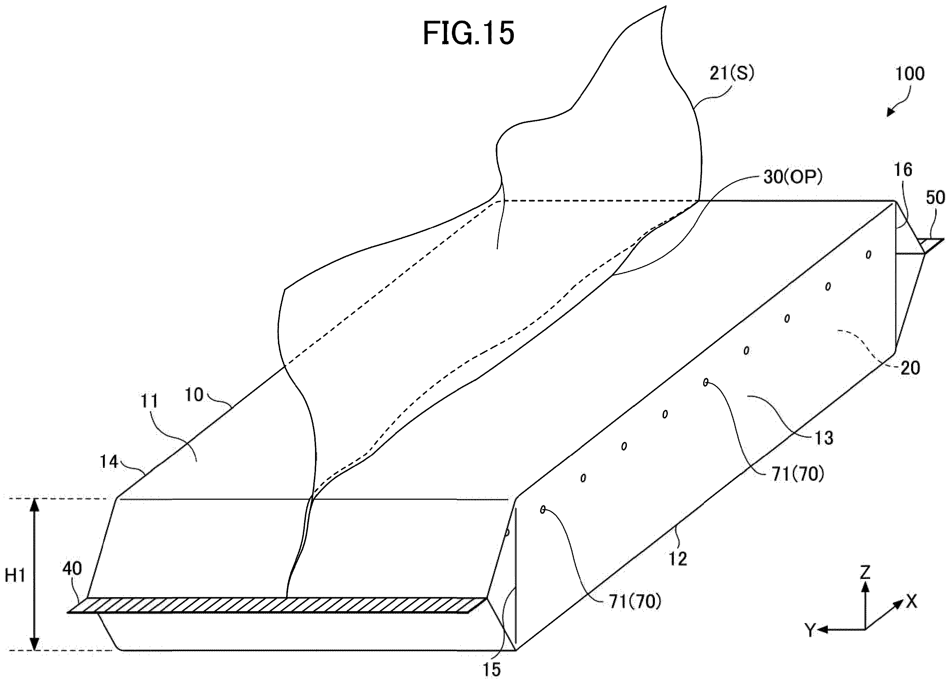

   FIG. 15 is a diagram illustrating a state in which the sheet package of FIG. 1 is being used.

### [Description of Embodiments]

### <Package>

Embodiments of the present invention will be described in detail with reference to the drawings. Same reference numerals are used to denote common components throughout the drawings, and description thereof may be omitted. The scale of each component in the drawings may differ from the actual scale. In each drawing, a three-dimensional orthogonal coordinate system with three axial directions (X direction, Y direction, and Z direction) is used. The longitudinal direction, the width direction, and the height direction (vertical direction or thickness direction) of the packaging bag are defined as X direction, Y direction, and Z direction, respectively.

FIG. 1 is a diagram illustrating a sheet package in which sheets are contained in a packaging bag according to an embodiment. FIG. 2 is a diagram illustrating the sheets contained in the packaging bag according to the embodiment. FIGS. 3, 4, 5, 6, 7, and 8 are views of the sheet package of FIG. 1 from the top, bottom, front, back, left, and right sides, respectively.

A sheet package 100 includes a packaging bag 10 and a sheet stacked body 20 (a plurality of sheets S) as illustrated in FIG. 1. The sheet package 100 is an example of the sheet package according to the present embodiment. The packaging bag 10 is an example of the packaging bag forming the sheet package according to the present embodiment. The sheet stacked body 20 is an example of the sheets contained in the packaging bag according to the present embodiment.

The packaging bag 10 stores a plurality of (or a plurality of sets of) stacked sheets S (the sheet stacked body 20 or a stacked body SL) as illustrated in FIG. 2. The sheet stacked body 20 is stored in the packaging bag 10 so that the stacking direction (SD direction) of the sheets S is the height direction (Z direction). The sheet stacked body 20 is configured such that the sheets S can be pulled out one set at a time through a dispensing opening 30 (an opening OP), which will be described later, formed in the packaging bag 10 (see FIG. 15).

The configuration of the stacked body SL of the sheets S is not particularly limited, but may be, for example, one in which the sheets S are folded and stacked, one in which each of the sheets S is folded and alternately stacked (what is known as a sheet stacked body in a pop-up manner), or one in which a plurality of sheets S are simply stacked.

The dimensions of the sheets S (the sheet stacked body 20) may be such that the length L2 of the packaging bag 10 in the longitudinal direction (X direction) is approximately 150 to 250 mm, the width W2 in the width direction (Y direction) perpendicular to the longitudinal direction (X direction) of the packaging bag 10 is approximately 70 to 150 mm, and the height H2 in the height direction (Z direction) is approximately 20 to 100 mm (See FIGS. 2 and 3). Such a stacked body of sheets may be manufactured, for example, using a rotary or multi-stand inter folder.

The form of the sheet S is not particularly limited. For example, the sheet S may be applied to hygienic sheets such as paper towels, kitchen paper, tissue paper, toilet paper, and the like. The hygienic sheets include those containing moisturizing ingredients (for example, lotion tissues and the like).

The application of the sheet S is not particularly limited. The sheet S may be applied to industrial, household, and portable applications. Among these, household and portable paper towels are preferable as the sheets of the present embodiment.

The number of plies of the sheet S is not particularly limited, but may be one or more plies, preferably one ply or two plies (two layers). The shape of the sheet S is not particularly limited, but it is preferable, for example, that the outline shape of the folded two-ply sheet is a quadrangle (rectangle, square, or the like).

The material of the sheet S is not particularly limited. For example, a sheet of paper, nonwoven fabric, cloth, or the like may be used, preferably paper (a paper sheet). When the sheet S is a paper sheet, base paper made mainly from pulp is used. The pulp composition may be any publicly known composition used for paper sheets. For example, the percentage of pulp may be 50% by mass or more, preferably 90% by mass or more, and more preferably 100% by mass.

Moreover, the pulp composition in the sheet S (paper sheet) is not particularly limited. For example, softwood pulps such as needle bleached kraft pulp (NBKP) and needle unbleached kraft pulp (NUKP) and hardwood pulps such as leaf bleached kraft pulp (LBKP) and leaf unbleached kraft pulp (LUKP) may be used in any proportion.

The ratio of the hardwood pulp to the softwood pulp is not limited, but is preferably 10:90 to 80:20, and more preferably a pulp composition with a higher ratio of the softwood pulp to the hardwood pulp. For the pulp contained in the sheet S (paper sheet), recycled paper pulp may be used.

The basis weight of the sheet S is not particularly limited, but in the case of paper, may be 5 g/m² or more and 80 g/m² or less, preferably 10 g/m² or more and 60 g/m² or less, more preferably 10 g/m² or more and 45 g/m² or less, depending on the number of plies. In the case of nonwoven fabric, 20 g/m² or more and 100 g/m² or less is preferable. The basis weight is measured in accordance with JIS P 8124 (2011).

The thickness of the sheet S (paper sheet) is not particularly limited. Paper thickness measured under the atmosphere of JIS P 8111 (1998) may be adopted. For example, when the sheet S is paper, the paper thickness per 2 ply is 50 µm or more and 600 um or less, preferably 60 um or more and 500 um or less, and more preferably 130 um or more and 400 um or less.

The sheet S (paper sheet) may be embossed. Such embossing may be performed by a publicly known embossing method.

The packaging bag 10 includes a paper layer 10A containing a paper component, and a resin layer (a resin layer 10B, or resin layers 10B and 10C) containing a thermoplastic resin provided on at least one surface of the paper layer 10A (FIGS. 9 and 10). The proportion of the paper component in the packaging bag 10 is 50% or more.

The paper component is, for example, agglutinated plant fiber (pulp). The pulp composition in the paper component is not limited. For example, the ratio of the hardwood pulp to the softwood pulp is 0:100 to 70:30, and preferably a pulp composition with a higher ratio of the softwood pulp to hardwood pulp. For the pulp, recycled paper pulp may be used.

In the present embodiment, the resin layer provided on at least one surface of the paper layer 10A has, for example, a two-layer structure in which the resin layer 10B is provided on one surface of the paper layer 10A (FIG. 9) or a three-layer structure in which the resin layers 10B and 10C are laminated on both surfaces of the paper layer 10A (FIG. 10).

The material of the paper layer 10A making up part of the packaging bag 10 is not particularly limited. The paper layer 10A may be formed of, for example, kraft paper or rayon paper. The kraft paper refers to paper made from kraft pulp. The rayon paper refers to paper made by blending rayon fibers, which are chemically synthesized from wood pulp or the like, with the kraft pulp. From the viewpoint of achieving both softness and strength of the packaging bag 10, the rayon paper preferably contains 20% by mass or less of the rayon fibers.

The basis weight of the paper layer 10A making up part of the packaging bag 10 is not limited, but is preferably 10 g/m² or more and 40 g/m² or less, more preferably 15 g/m² or more and 35 g/m² or less, and even more preferably 20 g/m² or more and 30 g/m² or less. The basis weight is measured in accordance with JIS P 8124 (2011) .

The thickness of the paper layer 10A making up part of the packaging bag 10 is not limited, but is, for example, preferably 20 um or more and 100 um or less, more preferably 25 um or more and 90 um or less, and even more preferably 40 um or more and 75 um or less. The thickness is measured in accordance with JIS P 8118 (2014).

The material of the thermoplastic resin contained in the resin layers 10B and 10C making up part of the packaging bag 10 is not particularly limited, but is preferably low-density polyethylene. The low-density polyethylene may be either high-pressure low-density polyethylene (LDPE) or linear low-density polyethylene (L-LDPE) .

The thickness of the resin layers 10B and 10C making up part of the packaging bag 10 is not limited, but is preferably 5 um or more and 40 um or less, more preferably 7 um or more and 35 um or less, and even more preferably 9 um or more and 30 um or less. The paper thickness is measured in accordance with JIS P 8118 (2014).

The basis weight of the packaging bag 10 is not limited, but is preferably 20 g/m² or more and 70 g/m² or less, more preferably 25 g/m² or more and 65 g/m² or less, and even more preferably 30 g/m² or more and 60 g/m² or less. The basis weight is measured in accordance with JIS P 8124 (2011).

The thickness of the packaging bag 10 is not limited, but is, for example, 25 um or more and 105 um or less, preferably 30 um or more and 95 um or less, and more preferably 45 um or more and 80 um or less. The thickness may be measured in accordance with JIS P 8118 (2014).

The density of the packaging bag 10 is not limited, but is, for example, 0.1 g/m³ or more and 1.5 g/m³ or less, 0.3 g/m³ or more and 1.2 g/m³ or less, more preferably 0.5 g/m³ or more and 0.9 g/m³ or less. The density is measured in accordance with JIS P 8118 (2014).

The tensile strength of the packaging bag 10 is not limited, but is, for example, 1 kN/m or more and 6 kN/m or less, preferably 1.3 kN/m or more and 5.5 kN/m or less, and more preferably 1.5 kN/m or more and 5 kN/m or less, in the longitudinal direction of the fiber (the machine direction at the time of manufacture: MD direction). The tensile strength is, for example, 0.1 kN/m or more and 2.5 kN/m or less, preferably 0.2 kN/m or more and 2.4 kN/m or less, and more preferably 0.3 kN/m or more and 2.3 kN/m or less, in the cross direction (perpendicular to the machine direction at the time of manufacture: CD direction). Tensile strength is measured in accordance with the provisions of JIS P 8113 (2006).

The tear strength of the packaging bag 10 is not limited, but is, for example, 70 mN or more and 350 mN or less, preferably 80 mN or more and 340 mN or less, more preferably 90 mN or more and 330 mN or less, in the longitudinal direction of the fiber (MD direction). The tear strength is, for example, 250 mN or more and 950 mN or less, preferably 280 mN or more and 930 mN or less, more preferably 300 mN or more and 920 mN or less, in the cross direction (CD direction). The tear strength is measured in accordance with JIS P 8116 (2000).

The softness of the packaging bag 10 is not limited, but is, for example, 90 mN/100 mm or more and 800 mN/100 mm or less, preferably 110 mN/100 mm or more and 750 mN/100 mm or less, and more preferably 130 mN/100 mm or more and 730 mN/100 mm or less, in the longitudinal direction of the fiber (MD direction). The softness is, for example, 40 mN/100 mm or more and 330 mN/100 mm or less, preferably 50 mN/100 mm or more and 310 mN/100 mm or less, and more preferably 60 mN/100 mm or more and 310 mN/100 mm or less, in the cross direction (CD direction).

The softness is measured based on the handle-o-meter method according to the method of JIS L 1096 E. Note that the test piece was 100 mm × 100 mm in size and the clearance was 5 mm. The softness was measured 5 times each in the longitudinal direction and the cross direction for 1 ply, and the average value of all 10 times was taken as one decimal place and expressed in units of mN.

The packaging bag 10 includes a top surface 11, a bottom surface 12, a side surface 13, a side surface 14, an end surface 15, and an end surface 16. In the packaging bag 10, the top surface 11 and the bottom surface 12 face each other in the vertical direction (Z direction), the side surface 13 and the side surface 14 face each other in the width direction (Y direction), and the end surface 15 and the end surface 16 face each other in the longitudinal direction (X direction). The end surfaces 15 and 16 are continuous with the top surface 11, the bottom surface 12, the side surface 13, and the side surface 14 (FIGS. 1, 3 to 8).

The dimensions of the packaging bag 10 may be such that the length L1 in the longitudinal direction (X direction) of the packaging bag 10 is approximately 150 to 250 mm, the width W1 in the width direction (Y direction) perpendicular to the longitudinal direction (X direction) of the packaging bag 10 is approximately 70 to 150 mm, and the height H1 in the height direction (Z direction) is approximately 20 to 100 mm (See FIGS. 1 and 3). The dimensions of the packaging bag 10 indicate the dimensions when the sheet stacked body 20 is stored in the packaging bag 10.

The dispensing opening 30 extending in the longitudinal direction (X direction) of the packaging bag 10 is formed on the top surface 11 side of the packaging bag 10, the top surface 11 side of the end surface 15, and the top surface 11 side of the end surface 16. Specifically, the dispensing opening 30 is formed by a tear perforation line 30. The tear perforation line 30 refers to a perforation line in which cuts C and ties T (uncut portions between two cuts C, C) are alternately arranged, and when the tie T is broken, the adjacent cuts C become a continuous cut (FIGS. 1, 3, 7, and 8) .

In the present embodiment, the tear perforation line 30 is composed of a straight perforation M in which the cuts C and the ties T are alternately arranged (FIGS. 1, 3, 7, and 8). In the packaging bag 10 of the present embodiment, by tearing open the perforation M, the opening OP is formed in the top surface 11 of the packaging bag 10 from which the sheet S is pulled out (FIG. 15).

The tear perforation line 30 can be manufactured by an appropriate method, but for example, the tear perforation line 30 can be made using a device 90 illustrated in FIG. 14. Specifically, the packaging bag 10 (a sheet for the packaging bag 10) is placed between a needle 91 and a base 92 of the device 90, and the tear perforation line 30 can be formed by piercing a tip 91A of the needle 91 through the packaging bag 10 toward a receiving groove 92A of the base 92.

Preferably, in the packaging bag 10 of the present embodiment, vent holes 70 and 80 are formed as illustrated in FIGS. 1, 5, and 6. The vent holes 70 and 80 may function as air holes of the packaging bag 10.

The positions of the vent holes 70 and 80 are not particularly limited. In the present embodiment, the vent holes 70 (a vent hole group 71) are provided on the side surface 13, on the end surface 15, and on the end surface 16 of the packaging bag 10 (FIG. 1 and FIG. 5), and the vent holes 80 (a vent hole group 81) are provided on the side surface 14, on the end surface 15, and on the end surface 16 of the packaging bag 10 (FIG. 6).

In the present embodiment, the vent hole groups 71 and 81 are provided, but the number of each of the vent holes 70 and 80 is not limited. The shape of each of the vent holes 70 and 80 is not particularly limited. In the present embodiment, the shape is circular in plan view. The dimensions of each of the vent holes 70 and 80 are not particularly limited. In the present embodiment, the diameter is approximately 2 mm.

The vent holes 70 and 80 can be manufactured by an appropriate method, but for example, they can be made using the device 90 illustrated in FIG. 14. Specifically, the packaging bag 10 (a sheet for the packaging bag 10) is placed between the needle 91 and the base 92 of the device 90, and the vent holes 70 and 80 can be formed by stabbing the tip 91A of the needle 91 toward the receiving groove 92A of the base 92.

When the device 90 is used to form the vent holes 70 and 80, the receiving groove 92A of the base 92 need not be provided. The shape of the base 92 is not limited, but may be a plate shape, a cylindrical shape, or the like. The number of the receiving groove 92A formed in the base 92 is not limited, but may be one in the base 92, or a plurality at predetermined intervals in the base 92.

The packaging form of the packaging bag 10 is not particularly limited. For example, as illustrated in FIGS. 9 and 10, packaging in which a sheet for the packaging bag 10 in which the resin layers 10B and 10C are laminated on the paper layer 10A is processed into a tubular shape, and the opening ends of the tubular sheet for the packaging bag are sealed (a pillow packaging bag), packaging in which both ends of the tubular sheet for the packaging bag 10 are folded and sealed (a caramel-wrapping packaging bag), a combination thereof, and the like may be used. In the present embodiment, the tubular sheet for the packaging bag to be packaged into the pillow packaging bag may be folded into a gusset shape.

In the present embodiment, the packaging bag 10 is composed of a pillow packaging bag that includes at least one seal portion. Specifically, seal portions (end seals) 40 and 50 are formed on the end surfaces 15 and 16 of the packaging bag 10, and a seal portion (bottom seal) 60 is formed on the bottom surface 12 of the packaging bag 10, so that the sheets S (the sheet stacked body 20) are pillow-packaged.

In the packaging bag 10 of the present embodiment, the seal portions 40, 50, and 60 are heat-sealed in a state where the resin layer (the resin layers 10B and 10C) is provided at an inner side of the pillow packaging bag 10. The heat-sealing indicates that a part of the sheet for the packaging bag is heated and the parts of the packaging bag sheet are welded to each other.

Specifically, in the packaging bag (pillow packaging bag) 10 having a two-layer structure illustrated in FIG. 9, the seal portions 40, 50, and 60 are heat-sealed in a state where the resin layer 10B laminated on the paper layer 10A is provided at an inner side of the packaging bag 10. In the packaging bag (pillow packaging bag) 10 having a three-layer structure illustrated in FIG. 10, the seal portions 40, 50, and 60 are heat-sealed in a state where either the resin layer 10B or the resin layer 10C laminated on the paper layer 10A is provided at an inner side of the packaging bag 10.

In the packaging bag 10 of the present embodiment, a joining pitch S1 in the seal portion 40, a joining pitch S2 in the seal portion 50, and a joining pitch S3 in the seal portion 60 are preferably 0.5 mm or more and 2 mm or less, more preferably 0.8 mm or more and 1.8 mm or less, and even more preferably 1.0 mm or more and 1.5 mm or less (FIGS. 11, 12, and 13).

The joining pitch indicates the interval in the predetermined direction (for the seal portions 40 and 50, in the width direction (Y direction) of the packaging bag 10, and for the seal portion 60, in the longitudinal direction (X direction) of the packaging bag 10) of the portions (convex portions 41, 51, and 61) that are bonded in a convex shape when viewed from one side (for example, the bottom surface 12 side of the packaging bag 10) of the seal portions 40, 50, and 60.

In the packaging bag 10 of the present embodiment, as described above, the resin layer 10B, or the resin layer 10B and the resin layer 10C, containing the thermoplastic resin is provided on at least one surface of the paper layer 10A containing the paper component. Accordingly, the packaging bag 10 can be softened. Thus, the stiffness of the packaging bag 10 can be reduced, and the followability can be imparted to the packaging bag 10. Therefore, according to the present embodiment, even when the material of the packaging bag is changed from resin to paper (that is, the packaging bag is paperized), it is possible to provide the packaging bag 10 that is less likely to break during manufacturing or transportation.

Moreover, in the present embodiment, the resin layer provided on at least one surface of the paper layer 10A contains the thermoplastic resin. Accordingly, when the packaging bag 10 is sealed, by heating the resin layer (the resin layer 10B, or the resin layers 10B and 10C), the melted resin layer (the resin layer 10B, or the resin layers 10B and 10C) can function as an adhesive (has an adhesive function), and thus the packaging bag 10 can be easily sealed.

Furthermore, in the present embodiment, the proportion of the paper component in the packaging bag 10 is 50% or more. Accordingly, the environmental load can be reduced.

In the packaging bag 10 of the present embodiment, when the basis weight of the paper layer 10A is 10 g/m² or more and 40 g/m² or less, as described above, the strength of the packaging bag 10 can be maintained. Therefore, according to the present embodiment, it is possible to provide the packaging bag 10 that is even less likely to break.

In the present embodiment, when the paper layer 10A is formed of kraft paper or rayon paper, as described above, the strength of the packaging bag 10 can be maintained while reducing the stiffness of the packaging bag 10.

In the present embodiment, when the thickness of the resin layer (the resin layer 10B, or the resin layers 10B and 10C) is 5 um or more and 40 um or less, as described above, the proportion of the paper component in the packaging bag can be easily maintained at 50% or more. In addition, the adhesive function of the resin layer (the resin layer 10B, or the resin layers 10B and 10C) at the time of sealing the packaging bag can be maintained while reducing the stiffness of the packaging bag.

In the present embodiment, when the low-density polyethylene is used as the thermoplastic resin contained in the resin layer (the resin layer 10B, or the resin layers 10B and 10C), as described above, the adhesive function of the resin layer (the resin layer 10B, or the resin layers 10B and 10C) at the time of sealing the packaging bag 10 can be improved while further reducing the stiffness of the packaging bag 10.

In the present embodiment, when the packaging bag 10 is the pillow packaging bag and at least one seal portion is heat-sealed in a state where the resin layer (the resin layer 10B, or the resin layers 10B and 10C) is provided at an inner side of the pillow packaging bag 10, as described above, the resin layers can be bonded to each other. Accordingly, the adhesive function of the resin layer (the resin layer 10B, or the resin layers 10B and 10C) can be effectively utilized, and it is possible to obtain the pillow packaging bag 10 with high sealability.

In the present embodiment, when the joining pitch in the seal portions (the seal portions 40, 50, and 60) is 0.5 mm or more and 2 mm or less, as described above, the adhesive function of the resin layer (the resin layer 10B, or the resin layers 10B and 10C) provided on the paper layer 10A can be improved, and it is possible to obtain the pillow packaging bag 10 with higher sealability.

In the present embodiment, when the vent holes 70 (the vent hole group 71) and the vent holes 80 (the vent hole group 81) are formed in the packaging bag 10, as described above, the packaging bag is less likely to burst during storage or transportation of the sheet package 100.

In the present embodiment, when the tear perforation line 30 is formed in the packaging bag 10, the packaging bag 10 can be opened only by tearing open the tear perforation line 30. In addition, the torn open tear perforation line 30 can constitute the dispensing opening 30 (the opening OP) of the packaging bag 10. Furthermore, in the present embodiment, the tear perforation line 30 is provided in the packaging bag 10 to which the followability is imparted by laminating the resin layer (the resin layer 10B, or the resin layers 10B and 10C) on the paper layer 10A. Accordingly, the tear perforation line 30 can be easily torn open.

### <Method for Manufacturing Packaging Bag>

The method for manufacturing the packaging bag according to the present embodiment is the method for manufacturing the packaging bag 10 as described above. Specifically, the method includes a sealing process of heat-sealing the seal portions 40, 50, and 60 of the packaging bag 10. In the sealing process, heat-sealing is performed at a heating temperature of 140°C or more and 180°C or less, preferably 140°C or more and 170°C or less, and more preferably 140°C or more and 160°C or less. For processes other than the sealing process, processes used in conventional methods for manufacturing resin film packaging bags can be adopted.

According to the method for manufacturing the packaging bag according to the present embodiment, the heating temperature in the sealing process of heat-sealing the seal portions (the seal portions 40, 50, and 60) of the packaging bag 10 is 140°C or more and 180°C or less. Accordingly, even when the packaging bag is paperized as described above, it is possible to obtain the packaging bag 10 with high sealability.

### <Sheet Package>

The sheet package according to the present embodiment includes the packaging bag 10 and the sheets S contained in the packaging bag 10 described above. Specifically, the sheet package according to the present embodiment may consist of the sheet package 100 including the packaging bag 10 and the sheet stacked body 20 (a plurality of sheets S) described above.

In the sheet package of the present embodiment, the sheet package 100 includes the packaging bag 10 described above in which the sheets S (the sheet stacked body 20) are stored. Accordingly, the same effect as in the packaging bag 10 described above can be obtained. That is, according to the present embodiment, even when the packaging bag is paperized, it is possible to provide the sheet package 100 in which the packaging bag 10 is less likely to break during manufacturing or transportation.

Moreover, in the present embodiment, when the packaging bag 10 is sealed, by heating the resin layer (the resin layers 10B and 10C), the melted resin layer (the resin layers 10B and 10C) can function as an adhesive (has an adhesive function), and thus it is possible to obtain the sheet package 100 in which the packaging bag 10 can be easily sealed.

Furthermore, in the present embodiment, the proportion of the paper component in the packaging bag 10 is 50% or more. Accordingly, it is possible to obtain the sheet package 100 by which the environmental load can be reduced.

### [Example]

Hereafter, the present invention will be described in more detail with Examples. Examples and Comparative Examples are evaluated by the following tests.

### [Sample]

A sheet package 100 in which a plurality of sheets S (a sheet stacked body 20) were pillow-packaged in a packaging bag 10 was prepared as a sample (FIGS. 1 to 8). For the sheet stacked body 20, paper towels (product name "Elleveir Eco-Dry (medium size)", manufactured by Daio Paper Corporation, 200 pairs, height H1: 65 mm, length L1: 210 mm, width (depth) W1: 115 mm, basis weight 33 g/m², paper thickness 180 µm) in which the sheets S were stacked in a folded state were used.

### [Grammage]

The grammage (basis weight) of the packaging bag 10 in the sample was measured in accordance with JIS P 8124 (2011). The unit of the grammage is g/m².

### [Paper Thickness]

The paper thickness (thickness) of the packaging bag 10 in the sample was measured in accordance with JIS P 8118 (2014). The unit of the thickness is um.

### [Density]

The density of the packaging bag 10 in the sample was measured in accordance with JIS P 8118 (2014). The unit of the density is g/m³.

### [Tensile Strength]

The tensile strength (mN) of the packaging bag 10 in the sample in the longitudinal direction (MD direction) and the cross direction (CD direction) was measured in accordance with JIS P 8113 (2006) using TENSILON universal testing machine (manufactured by A&D Company, Ltd., RTG-1210).

### [Stretch]

The stretch (%) of the packaging bag 10 in the sample in the longitudinal direction (MD direction) and the cross direction (CD direction) was measured in accordance with JIS P 8113 (2006) using TENSILON universal testing machine (manufactured by A&D Company, Ltd., RTG-1210).

### [Tear Strength]

The tear strength of the packaging bag 10 in the sample in the longitudinal direction (MD direction) and the cross direction (CD direction) of the fiber was measured in accordance with JIS P 8116 (2000) using a tear strength tester (Elmendorf Tearing Strength Tester (digital display type), manufactured by Kumagai Riki Kogyo Co., Ltd.).

### [Softness]

The softness of the packaging bag 10 in the sample was measured based on the handle-o-meter method according to the method of JIS L 1096 E. The test piece was 100 mm × 100 mm in size and the clearance was 5 mm. The softness was measured 5 times each in the front and longitudinal direction (MD direction) and in the front and cross direction (CD direction), and the average value of all 10 times was expressed in units of mN/100 mm. The softness was measured based on the handle-o-meter method according to the method of JIS L 1096 E. Note that the test piece was 100 mm × 100 mm in size and the clearance was 5 mm. The softness was measured 5 times each in the longitudinal direction and in the cross direction for 1 ply using a handle-o-meter (a texture measuring device, manufactured by Kumagai Riki Kogyo Co., Ltd.), and the average value of all 10 times was taken as one decimal place and expressed in mN.

### [Heat Seal Strength]

The heat seal strength of the packaging bag 10 in the sample was tested. The heat seal strength was measured at 120°C, 140°C, 160°C, and 180°C. The heat seal strength was measured using a load cell tensile tester (manufactured by A&D Company, Ltd., TENSILON RTG-1210) and a heat gradient tester (manufactured by Toyo Seiki Seisakusho, Ltd., TYPE HG-100). A test piece of 300 mm long in the longitudinal direction and 120 mm wide in the cross direction was folded longitudinally inward with the heat seal surface inside, and the test piece was sealed with the heat gradient tester. At this time, the test was performed with the load of 1.0 kgf, the time of 1.0 seconds, and the temperature settings of 4 levels of 120°C, 140°C, 160°C, and 180°C. As the heat blocks, five blocks (five in a row) each 1.0 cm wide and 2.5 cm long were used, and the load was equalized. From the heat-sealed test piece, a test piece for heat seal strength measurement was taken. The test piece was about 1.5 cm wide and 15 cm long and includes one heat block of the heat seal portion. Both ends of the test piece are set in the load cell tensile tester with 100 mm between chucking. The heat seal portion is positioned in the center of the test piece, and the tensile test was performed.

### [Paper Ratio]

For the packaging bag 10 in the sample, the ratio of the paper component was calculated as the paper ratio (%). The weight of the resin layer (polyethylene) was calculated from the specific gravity and film thickness.

### [End Seal]

For the sample, the end seal (the seal portions 40 and 50) was tested to evaluate whether the end seal (the seal portions 40 and 50) broke when the end seal (the seal portions 40 and 50) was picked and spread in the longitudinal direction (X direction) of the sample. The end seal was evaluated as good when the end seal did not break, and poor when the end seal broke.

### [Bottom Seal]

For the sample, the end seal (the seal portions 40 and 50) side of the bottom seal (the seal portion 60) was tested whether the bottom seal (seal portion 60) broke when the end seal was pinched and spread in the longitudinal direction (X direction) of the sample. The bottom seal was evaluated as good when the bottom seal did not break, and poor when the bottom seal broke.

### [Break]

The sample was tested whether the packaging bag 10 is broken, by compressing by hand from the top surface 11 and the bottom surface 12. It was evaluated as excellent when none of the packaging bag 10 and the seal portions 40, 50, and 60 was broken, good when none of the packaging bag 10 and the seal portions 40, 50, and 60 was broken but not flexible, and poor when any of the seal portions 40, 50, and 60 was broken.

### [Air Hole]

It was tested whether air holes (the vent holes 70 and 80) could be formed in the sample. It was evaluated as excellent when the vent holes 70 and 80 were formed easily, good when the vent holes 70 and 80 were formed but were difficult to form, and poor when the vent holes 70 and 80 were not formed.

### [Perforation]

It was tested whether the perforation M (the tear perforation line 30) could be formed on the top surface 11 of the packaging bag 10 of the sample. It was evaluated as excellent when the perforation M was easily formed, good when the perforation M was formed but was difficult to form, and poor when the perforation M was not formed.

Examples and Comparative Examples are described below.

### [Example 1]

In the packaging bag 10 of the sample (the sheet package 100), the paper layer 10A was made of kraft paper with a basis weight of 30 g/m² and the resin layer 10B was made of 15 um low-density polyethylene, in a two-layer structure. Table 1 describes the grammage, paper thickness, density, tensile strength in the longitudinal direction and the cross direction, stretch, tear strength, softness, heat seal strength, paper ratio, end seal, bottom seal, break, air hole, and perforation.

### [Example 2]

Measurements and evaluations were performed in the same manner as in Example 1, except that the paper layer 10A was made of kraft paper with a basis weight of 30 g/m², the resin layer 10B was made of 12 µm low-density polyethylene, and the resin layer 10C was made of 20 um low-density polyethylene. The results are described in Table 1.

### [Example 3]

Measurements and evaluations were performed in the same manner as in Example 2, except that the thickness of the resin layer 10B was 15 um and the thickness of the resin layer 10C was 15 um. The results are described in Table 1.

### [Example 4]

Measurements and evaluations were performed in the same manner as in Example 1 except that the thickness of the resin layer 10B was 30 um. The results are described in Table 1.

### [Example 5]

Measurements and evaluations were performed in the same manner as in Example 1 except that the thickness of the resin layer 10B was 11 um. The results are described in Table 1.

### [Example 6]

Measurements and evaluations were performed in the same manner as in Example 1, except that the basis weight of the paper layer 10A was 20 g/m² and the thickness of the resin layer 10B was 11 um. The results are described in Table 1.

### [Example 7]

Evaluations were performed in the same manner as in Example 1, except that the paper layer 10A was made of rayon paper with a basis weight of 30 g/m². The results are described in Table 1.

### [Example 8]

Measurements and evaluations were performed in the same manner as in Example 7, except that the thickness of the resin layer 10B was 11 um. The results are described in Table 1.

### [Example 9]

Measurements and evaluations were performed in the same manner as in Example 7, except that the thickness of the resin layer 10B was 20 um. The results are described in Table 1.

### [Example 10]

Measurements and evaluations were performed in the same manner as in Example 7, except that the basis weight of the paper layer 10A was 20 g/m² and the thickness of the resin layer 10B was 11 um. The results are described in Table 1.

### [Comparative Example 1]

In the packaging bag 10 of the sample (the sheet package 100), the paper layer 10A was made of kraft paper with a basis weight of 20 g/m², in a one-layer structure. Table 1 describes the grammage, paper thickness, density, tensile strength in the longitudinal direction and the cross direction, stretch, tear strength, softness, heat seal strength, paper ratio, end seal, bottom seal, break, air hole, and perforation.

### [Comparative Example 2]

Measurements and evaluations were performed in the same manner as in Comparative Example 1, except that the basis weight of the paper layer 10A was 30 um. The results are described in Table 1.

### [Comparative Example 3]

Measurements and evaluations were performed in the same manner as in Comparative Example 1, except that the basis weight of the paper layer 10A was 40 um. The results are described in Table 1.

### [Comparative Example 4]

Measurements and evaluations were performed in the same manner as in Comparative Example 1, except that the seal portions 40, 50, and 60 were sealed with adhesive. The results are described in Table 1.

### [Comparative Example 5]

Evaluations were performed in the same manner as in Comparative Example 1, except that the paper layer 10A was made of rayon paper with a basis weight of 20 g/m². The results are described in Table 1.

### [Comparative Example 6]

Evaluations were performed in the same manner as in Comparative Example 5, except that the basis weight of the paper layer 10A was 30 um. The results are described in Table 1.

**[Table 1]**

| | | EXAMPLE 1 | EXAMPLE 2 | EXAMPLE 3 | EXAMPLE 4 | EXAMPLE 5 | EXAMPLE 6 | EXAMPLE 7 | EXAMPLE 8 | EXAMPLE 9 | EXAMPLE 10 | COM-PAR-ATIVE EXAMPLE 1 | COM-PAR-ATIVE EXAMPLE 2 | COM-PAR-ATIVE EXAMPLE 3 | COM-PAR-ATIVE EXAMPLE 4 | COM-PAR-ATIVE EXAMPLE 5 | COM-PAR-ATIVE EXAMPLE 6 |
|---|---|---|---|---|---|---|---|---|---|---|---|---|---|---|---|---|---|
| GRAMMAGE (g/m²) | | 43.3 | 60.4 | 57.8 | 57.5 | 41.7 | 30.4 | 45.2 | 41.6 | 46.4 | 30.8 | 20.7 | 30.6 | 42.5 | 20.7 | 30.4 | 30.5 |
| THICKNESS (*µ* m) | | 57 | 74 | 69 | 70 | 56 | 39 | 72 | 67 | 69 | 54 | 35 | 54 | 69 | 35 | 39 | 65 |
| DENSITY (g/cm³) | | 0.76 | 0.82 | 0.84 | 0.82 | 0.74 | 0.78 | 0.63 | 0.62 | 0.67 | 0.57 | 0.59 | 0.57 | 0.62 | 0.59 | 0.78 | 0.47 |
| TENSILE STRENGTH | LONGITUDINAL (kN/m) | 4.39 | 4.73 | 5.27 | 5.03 | 4.84 | 3.8 | 2.84 | 2.75 | 2.25 | 1.72 | 3.1 | 4.93 | 5.06 | 3.1 | 3.8 | 2.07 |
| | CROSS (kN/m) | 0.95 | 1.29 | 1.37 | 1.32 | 1.07 | 0.74 | 0.74 | 0.61 | 0.59 | 0.4 | 0.56 | 0.97 | 1.41 | 0.56 | 0.74 | 0.48 |
| STRETCH | LONGITUDINAL (%) | 3.8 | 3.8 | 3.7 | 3.3 | 3.4 | 2.6 | 3.7 | 3.1 | 2.4 | 3 | 2.5 | 3.6 | 4.5 | 2.5 | 2.6 | - |
| | CROSS (%) | 3.2 | 4.1 | 4.7 | 3.7 | 3.1 | 2.9 | 3.5 | 3.1 | 3.1 | 3.4 | 2.1 | 2.9 | 3.6 | 2.1 | 2.9 | - |
| TEAR STRENGTH | LONGITUDINAL (mN) | 160 | 240 | 180 | 225 | 164 | 100 | 318 | 310 | 293 | 190 | 80 | 145 | 256 | 80 | 100 | 250 |
| | CROSS (mN) | 329 | 444 | 399 | 408 | 306 | 230 | 757 | 917 | 750 | 324 | 210 | 268 | 582 | 210 | 230 | 620 |
| SOFTNESS | FRONT, LONGITUDINAL (mN/100 mm) | 136 | 160 | 655 | 721 | 627 | 243 | 191 | 698 | 650 | 243 | - | 72 | - | - | 243 | 162 |
| | FRONT, CROSS (mN/100 mm) | 61 | 73 | 292 | 308 | 218 | 83 | 80 | 221 | 227 | 83 | - | 33 | - | - | 83 | 52 |
| HEAT SEAL STRENGTH | 120°C (kN/m) | - | | 0.29 | 0.03 | | 0.25 | - | - | 0.06 | 0.17 | - | - | - | - | 0.25 | - |
| | 140°C (kN/m) | - | 0.37 | 0.45 | 0.64 | - | 0.37 | - | - | 0.23 | 0.31 | - | - | - | - | 0.37 | - |
| | 160°C (kN/m) | - | 0.3 | 0.36 | 0.65 | - | 0.4 | - | - | 0.24 | 0.33 | - | - | - | - | 0.4 | - |
| | 180°C (kN/m) | - | 0.31 | 0.42 | 0.66 | - | 0.34 | - | - | 0.25 | 0.29 | - | - | - | - | 0.34 | - |
| PAPER RATIO (%) | | 50 | 50 | 52 | 52 | 52 | 52 | 68 | 68 | 68 | 75 | 100 | 100 | 100 | 100 | 75 | 100 |
| END SEAL | | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | POOR | POOR | POOR | EXCEL-LENT | POOR | POOR |
| BOTTOM SEAL | | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | POOR | POOR | POOR | EXCEL-LENT | POOR | POOR |
| BREAK | | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | POOR | POOR | POOR | POOR | GOOD | POOR |
| AIR HOLE | | EXCEL-LENT | GOOD | GOOD | GOOD | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT |
| PERFORATION | | EXCEL-LENT | GOOD | GOOD | GOOD | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT | EXCEL-LENT |

Ftom Table 1, it was found that in the samples in which the resin layer 10B, or the resin layers 10B and 10C, was provided in the paper layer 10A, and in which the proportion of the paper component of the packaging bag 10 was 50% or more, the results were good or more in any of the end seal, bottom seal, break, air hole, and perforation (Examples 1 to 10). In contrast, in the samples in which the packaging bag was composed only of the paper layer 10A, the results were poor in the end seal, bottom seal, break, and/or perforation (Comparative Examples 1 to 6).

From these results, it was found that the packaging bag for storing sheets that includes a paper layer containing a paper component; and a resin layer containing a thermoplastic resin provided on at least one surface of the paper layer, in which a proportion of the paper component in the packaging bag is 50% or more, is a packaging bag that is less likely to break even when it is paperized.

Although the embodiments of the present invention have been described above, the present invention is not limited to the specific embodiments, and various modifications and changes are possible within the scope of the invention as described in the claims.

The following is a list of preferred aspects of the invention.

The first aspect of the present invention is a packaging bag for storing sheets, the packaging bag including: a paper layer containing a paper component; and a resin layer containing a thermoplastic resin provided on at least one surface of the paper layer, wherein a proportion of the paper component in the packaging bag is 50% or more.

In the present specification, "a resin layer provided on at least one surface of the paper layer" indicates either a two-layer structure in which a resin layer is provided on one surface of the paper layer or a three-layer structure in which resin layers are laminated on both surfaces of the paper layer.

In the first aspect, the resin layer containing the thermoplastic resin is provided on at least one surface of the paper layer containing the paper component. Accordingly, the packaging bag can be softened. Thus, the stiffness of the packaging bag can be reduced, and the followability can be imparted to the packaging bag. Therefore, even when the material of the packaging bag is changed from resin to paper (that is, the packaging bag is paperized), it is possible to provide the packaging bag that is less likely to break during manufacturing or transportation.

In the first aspect, the resin layer provided on at least one surface of the paper layer contains a thermoplastic resin. Accordingly, when the packaging bag is sealed, by heating the resin layer, the melted resin layer can function as an adhesive (has an adhesive function), and thus the packaging bag can be easily sealed. Furthermore, in the first aspect, the proportion of the paper component in the packaging bag is 50% or more. Accordingly, the environmental load can be reduced.

The second aspect according to the present invention is the packaging bag in which the basis weight of the paper layer is 10 g/m² or more and 40 g/m² or less. In the second aspect, when the basis weight of the paper layer is 10 g/m² or more and 40 g/m² or less, the strength of the packaging bag can be maintained. Therefore, according to the second aspect, it is possible to provide the packaging bag that is even less likely to break.

The third aspect according to the present invention is the packaging bag in which the paper layer is formed of kraft paper or rayon paper. In the present specification, the kraft paper refers to paper made from kraft pulp. The rayon paper refers to paper made by blending rayon fibers, which are chemically synthesized from wood pulp or the like, with the kraft pulp. From the viewpoint of achieving both softness and strength of the packaging bag, the rayon paper preferably contains 20% or less by mass of the rayon fibers.

In the third aspect, when the paper layer is formed of kraft paper or rayon paper, the strength of the packaging bag can be maintained while reducing the stiffness of the packaging bag.

The fourth aspect according to the present invention is the packaging bag in which the thickness of the resin layer is 5 um or more and 40 um or less. In the fourth aspect, when the thickness of the resin layer is 5 um or more and 40 um or less, the proportion of the paper component in the packaging bag can be easily maintained at 50% or more. In addition, the adhesive function of the resin layer at the time of sealing the packaging bag can be maintained while reducing the stiffness of the packaging bag.

The fifth aspect according to the present invention is the packaging bag in which the thermoplastic resin is low-density polyethylene. In the fifth aspect, when the low-density polyethylene is used as the thermoplastic resin contained in the resin layer, the adhesive function of the resin layer at the time of sealing the packaging bag can be improved while further reducing the stiffness of the packaging bag.

The sixth aspect according to the present invention is the packaging bag that is a pillow packaging bag including at least one seal portion, and the seal portion is heat-sealed in a state where the resin layer is arranged at an inner side of the pillow packaging bag. The pillow packaging bag is a packaging bag in which the opening ends of the tubular sheet for the packaging bag are sealed. The heat-sealing indicates that a part of the sheet for the packaging bag is heated and the parts of the packaging bag are welded to each other.

In the sixth aspect, when the packaging bag is the pillow packaging bag and at least one seal portion is heat-sealed in a state where the resin layer is arranged at an inner side of the pillow packaging bag, the resin layers can be bonded to each other. Accordingly, the adhesive function of the resin layer can be effectively utilized, and it is possible to obtain the pillow packaging bag with high sealability.

The seventh aspect according to the present invention is the packaging bag in which the joining pitch of the seal portion is 0.5 mm or more and 2 mm or less. In the present specification, the joining pitch indicates the interval in a predetermined direction of the portion that are bonded in a convex shape when viewed from one side of the seal portion. In the seventh aspect, when the joining pitch of the seal portion is 0.5 mm or more and 2 mm or less, the adhesive function of the resin layer provided on the paper layer can be improved, and it is possible to obtain the pillow packaging bag with higher sealability.

The eighth aspect according to the present invention is the packaging bag in which a vent hole is formed. In the eighth aspect, when the vent hole is formed in the packaging bag, the packaging bag is less likely to burst during storage or transportation of the sheet package.

The ninth aspect according to the present invention is the packaging bag in which the tear perforation line is formed. In the present specification, the tear perforation line refers to a perforation line in which cuts and ties (uncut portions between two cuts) are alternately arranged, and when the tie is broken, the adjacent cuts become a continuous cut.

In the ninth aspect, when the tear perforation line is formed in the packaging bag, the packaging bag can be opened only by tearing open the tear perforation line. In addition, the torn open tear perforation line can constitute the dispensing opening of the packaging bag. Furthermore, in the ninth aspect, the tear perforation line is provided in the packaging bag to which the followability is imparted by the laminating the resin layer on the paper layer. Accordingly, the tear perforation line can be easily torn open.

The tenth aspect according to the present invention is a method for manufacturing the packaging bag according to the first to ninth aspects, the method including: a sealing process of heat-sealing a seal portion of the packaging bag, wherein a heating temperature in the sealing process is 140°C or more and 180°C or less. In the tenth aspect, the heating temperature in the sealing process of heat-sealing the seal portion of the packaging bag is 140°C or more and 180°C or less, even when the packaging bag is paperized as described above, it is possible to obtain the packaging bag with high sealability.

The eleventh aspect according to the present invention is a sheet package including: the packaging bag according to the first to ninth aspects; and the sheets stored in the packaging bag. In the eleventh aspect, the sheet package includes the packaging bag described above in which the sheets are stored. Accordingly, the same effect as in the packaging bag described above can be obtained. That is, according to the eleventh aspect, even when the packaging bag is paperized, it is possible to provide the sheet package in which the packaging bag is less likely to break during manufacturing or transportation.

In addition, in the eleventh aspect, when the packaging bag is sealed, by heating the resin layer, the melted resin layer can function as an adhesive (has an adhesive function), and thus it is possible to obtain the sheet package in which the packaging bag can be easily sealed. Furthermore, in the eleventh aspect, the proportion of the paper component in the packaging bag is 50% or more. Accordingly, it is possible to obtain the sheet package by which the environmental load can be reduced.

The present application claims priority to Japanese Patent Application No. 2021-2260, filed January 8, 2021 with the Japanese Patent Office. The contents of which are incorporated herein by reference in their entirety.

### [Description of the Reference Numeral]

100 sheet package
10 packaging bag
10A paper layer
10B,10C resin layer
11 top surface
12 bottom surface
13,14 side surface
15,16 end surface
20 sheet stacked body
S sheet
SL stacked body
30 perforation line (dispensing opening)
OP opening
40,50 seal portion (end seal)
41,51 convex portion
60 seal portion (bottom seal)
61 convex portion
70,71,80,81 vent hole (air hole)
90 device
91 needle
91A tip
92 base
92A receiving groove
L1,L2 length
W1,W2 width
H1,H2 height
S1,S2,S3 joining pitch

## Claims

1. A packaging bag for storing sheets, the packaging bag comprising:
a paper layer containing a paper component; and
a resin layer containing a thermoplastic resin provided on at least one surface of the paper layer,
wherein a proportion of the paper component in the packaging bag is 50% or more.

2. The packaging bag according to claim 1, wherein a basis weight of the paper layer is 10 g/m² or more and 40 g/m² or less.

3. The packaging bag according to claim 1 or 2, wherein the paper layer is formed of kraft paper or rayon paper.

4. The packaging bag according to any one of claims 1 to 3, wherein a thickness of the resin layer is 5 um or more and 40 um or less.

5. The packaging bag according to any one of claims 1 to 4, wherein the thermoplastic resin is low-density polyethylene.

6. The packaging bag according to any one of claims 1 to 5, wherein
the packaging bag is a pillow packaging bag that includes at least one seal portion, and
the seal portion is heat-sealed in a state where the resin layer is provided at an inner side of the pillow packaging bag.

7. The packaging bag according to claim 6, wherein a joining pitch in the seal portion is 0.5 mm or more and 2 mm or less.

8. The packaging bag according to any one of claims 1 to 7, wherein a vent hole is formed.

9. The packaging bag according to any one of claims 1 to 8, wherein a tear perforation line is formed.

10. A method for manufacturing the packaging bag of any one of claims 1 to 9, the method comprising:
a sealing process of heat-sealing a seal portion of the packaging bag,
wherein a heating temperature in the sealing process is 140°C or more and 180°C or less.

11. A sheet package comprising:
the packaging bag of any one of claims 1 to 9; and
one or more sheets stored in the packaging bag.
